# EUROPEAN PATENT SPECIFICATION

(11) **EP 2 194 696 B1**
(45) Date of publication and mention of the grant of the patent: **14.06.2017**
(21) Application number: 08021020.6
(22) Date of filing: 04.12.2008
(51) Int. Cl.: H04M 1/2745

(54) **Method and device for associating information items with geographical locations**
Verfahren und Vorrichtung zum Assoziieren von Informationselementen mit geografischen Orten
Procédé et dispositif pour associer des éléments d'informations avec des emplacements géographiques

(43) Date of publication of application: 09.06.2010
(73) Proprietor: Vodafone Holding GmbH, 40213 Düsseldorf (DE)
(72) Inventor: Leon, German, 40219 Düsseldorf (DE); Leinss, Mirja, 40545 Düsseldorf (DE); Mau, Jefferey, US-IL 60605 Chicago (US); Nieuwerth, Marielke, NL-9514 BE Gasselternijveen (BE); Leon, German, D-40219 Düsseldorf (DE)
(74) Representative: Jostarndt Patentanwalts-AG

(56) References cited:
- US-A1- 2005 032 527
- US-A1- 2008 055 427

## Description

### Technical field

The present invention relates to a method and a device for associating a data item with a geographical location. In particular the present invention relates to a method according to claim 1 and to a device according to claim 13.

### Background of the invention

Today there is an increasing number of digital communication devices such as personal digital assistance (PDA), portable computers, mobile telephones, palmtop computers, etc.. Sometimes these devices are also equipped with cameras by taking pictures, as well as video and audio recordings. The features and capabilities of the devices lead to an increasing number of data files that maybe exchanged between different devices and users by wireless or wired networks. As an example, a mobile telephone is no longer limited for receiving and making voice calls but it may take photographs, receive e-mails and SMS messages and voice messages. The variety of different kinds of communication increases the number of communication items significantly. This number of communication items is increased even more because one and the same communication item of the above mentioned types is frequently copied to a plurality of recipients. Because of the sheer quantity it becomes consequently more and more difficult for individuals to organize their communication items on a communication device especially if the communication device has only a small screen.

It is known to set up different kinds of directories in which the communication items are listed in a sequential order according to different sorting criteria such as the name of the sender, receiving time, sent time, subject, and the like. However, conventional sorting mechanisms still do not solve the issue completely and the presentation of a large number of communication items remains difficult to organize in this way. In general, it is very helpful for a user if he can link a specific information item within a certain context of other kinds of information.

Several attempts have been made to help the user to organize communication items in a more efficient way.

US 2008/0055427 A1discloses a method of generating a video-based diary of a user's activities based on various information stored and/or collected by a mobile phone. The generated video-based diary can be utilized by the user in the future as a reference for remembering past events.

US 5898435 describes an image controlling device and a corresponding method. According to the known device a menu is constructed by arranging a plurality of menu items three dimensionally along a single cylinder. A portion of these menu items is displayed in such a manner that viewing is performed from the centre of the cylinder outwards. However, there remains a desire for the user for more support in organizing his communication items.

US 2005/0032527 A1 discloses a method and an apparatus for recording and generating additional information related to telecommunication events using a mobile communication device. The mobile communication device records GPS coordinates during the communication event to facilitate a log entry of the position of the mobile communication device associated with the communication events.

### Summary of the invention

The present invention proposes a concept for associating information items with geographical locations to emphasise the context of each communication item. It is an advantage of the present invention to provide additional contextual information to each information item. Providing contextual information is a very efficient way to support the memory of the user helping him to find and organise information items.

According to a first aspect the invention suggests a method for organizing data items, wherein the method comprises the following steps:
- associating a communication event received by a communication device with the data item;
- generating a graphical element for each data item;
- associating the graphical element to the corresponding data item;
- determining geographical location data of a geographical location of the communication device; and
- linking the geographical location data with the data item;
characterized in, that
the method further comprises the step of displaying a map in conjunction with the graphical elements, where the graphical elements are positioned according to the geographical location data linked with the data item representing the geographical location, where the communication device received the communication event.

Linking the communication item geographical location data is valuable contextual information for the user to support his memory when he tries to remember a situation or to find a specific data item.

Advantageously, the method further comprises a step of associating a communication item with the data item.

According to a useful embodiment the method further comprises the step of displaying a map in conjunction with the graphical elements. A map is perhaps the most efficient way to communicate geographical location data to the user.

In this case it has been found to be useful if the method further comprises the step of providing a zooming functionality for the map. The method may provide a continuous zooming functionality or may provide a zooming functionality in discrete steps; and displaying a label to identify the different zooming levels. This depends on the embodiment of the invention.

In a convenient development of the inventive method it further comprises the step of positioning the graphical element associated with the data item according to the geographical location data linked with the data item.

In an advantageous embodiment the method further comprises the step of positioning the graphical element associated with the most recently received data item into the centre of the displayed map. In this way the user may immediately identify the most recently received data item and his own position on the map.

According to a second aspect the invention suggests a mobile communication device comprising a radio interface, an input unit, a display, and a processing means which is connected to a location detection module. The processing means is arranged to receive a communication item, to associate the communication item with a graphical element and to control the display such that a map is displayed on the display. The mobile communication device is further arranged to determine geographical location data of a geographical location of the communication device. The processing means places the graphical element on the map corresponding to the geographical location where the communication device has received the associated communication item.

According to an embodiment of the mobile communication device the graphical element is an icon.

In an advantageous embodiment the processing means is arranged to execute a zoom function on the map upon user request. This enables the user to select the level of detail on the map he requires for his purposes.

Further features and advantages will become apparent when reading the detailed description appended with drawings.

### Short description of the drawing

In the drawing exemplary embodiments of the invention are illustrated. It shows:
- Figure 1: a top view of the mobile communication device according to the invention;
- Figure 2: a schematic block diagram of the communication device;
- Figures 3a to 3d: top views of the communication device in different viewing modes; and
- Figures 4a to 4e: different zooming levels of the geography view shown in figure 3b.

Similar or identical features and elements are labeled with the same reference numbers in the drawing.

### Detailed description

Reference herein to "one embodiment" or "an embodiment" means that a particular feature, structure, or characteristic described in connection with the embodiment can be included in at least one implementation of the invention. The appearances of the phrase "in one embodiment" in various places in the specification are not necessarily all referring to the same embodiment, nor are separate or alternative embodiments necessarily mutually exclusive of other embodiments.

While the invention may be susceptible to various modifications and alternative forms, specific embodiments have been shown by way of example in the drawings and will be described in detail herein. However, it should be understood that the invention is not intended to be limited to the particular forms disclosed. Rather, the invention is to cover all modifications, equivalents and alternatives of the invention.

One or more specific embodiments of the present invention will be described below. In an effort to provide a concise description of these embodiments, not all features of an actual implementation are described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

Certain aspects commensurate in scope with the disclosed embodiments are set forth below. It should be understood that these aspects are presented merely to provide the reader with a brief summary of certain forms the invention might take and that these aspects are not intended to limit the scope of the invention. Indeed, the invention may encompass a variety of aspects that may not be set forth below.

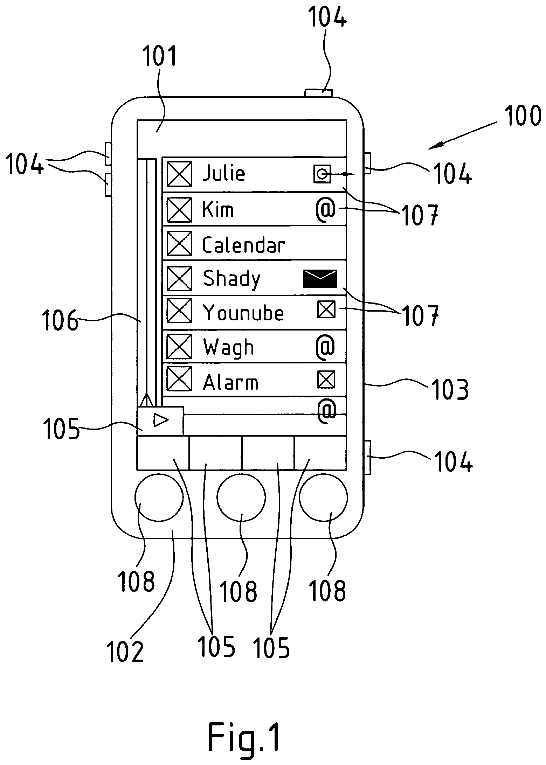

Figure 1 shows a mobile communication device 100 according to the present invention. Such as a mobile phone, a PDA (personal digital assistant) or the like, which is connected to a wireless public land mobile network (PLMN). The PLMN is a wireless telecommunication network according to GSM standard or according to the UMTS standard for example. The user of the communication device 100 can set up a connection to other communication devices through the network.

For the sake of the simplicity the present invention will be described in the following with reference to a PDA having a relatively large screen 101 covering a major part of the top surface 102 of the housing 103 of the mobile communication device. However, the present invention shall not be limited to PDAs.

On the periphery of the housing 103 there are buttons 104 provided enabling a user to control functionalities of the communication device 100. In addition to that, there are softkeys forming a command bar 105 and a scrollbar 106 available for the user for further control functionalities. In its main portion the screen 101 displays communication items 107 received by the communication device. Each communication item 107 displays a short name of the sender as well as an icon symbolizing the type of communication, e.g. e-mail, SMS etc. Finally, there are three hard keys 108 provided in the lower part of the top surface 102 of the housing 103.

The term "communication item" shall have a broad meaning in relation to the present invention. On the one hand it includes e-mail, voice, and SMS messages and the like but also contacts with other people and web sites of service providers. On the other hand also media files like pieces of music, video clips or pictures shall be comprised by the meaning of communication item. However, technically speaking a contact or a communication item is just a data item.

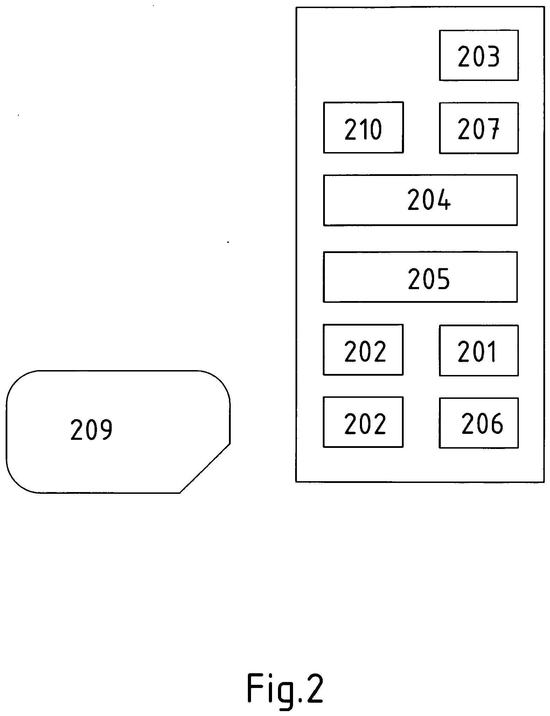

Figure 2 shows a schematic block diagram of the mobile communication device 100. The mobile communication device 100 comprises a mobile terminal 200 including a main processor 201 for controlling the operation of the mobile terminal 200. A memory 202 is coupled to the main processor 201 for storing data and applications that can be run on the main processor 201. Furthermore, the mobile terminal 200 comprises one or more communication interfaces. Particularly, the mobile terminal 200 provides a radio interface 203 for connecting the mobile terminal 200 wirelessly to a mobile communication network such as the PLMN mentioned above.

For capturing acoustic signals, particularly for capturing speech from the user of the mobile terminal 200, the mobile terminal 200 comprises a microphone 206. For outputting acoustic signals, the mobile terminal 200 comprises a loudspeaker 207. Moreover, the mobile terminal 200 comprises the screen 101, e.g. a liquid crystal display (LCD) 204. An input unit 205 interfaces the buttons 104, the command bar 105 and the hard keys 108.

By means of a card reader unit 208, the mobile terminal 200 can be connected to a subscriber identity module (SIM card) 209 to form the mobile communication device 100. The subscriber identity module 209 is a so-called smart card, which can be inserted into a card receptacle of the mobile terminal 200 that holds the card in a position, in which its contact elements are connected to corresponding contact elements of the card reader unit 208 of the mobile terminal 200. The card receptacle and the card reader unit 208 are usually arranged within a battery compartment of the mobile terminal 200, which is accessible by the mobile user.

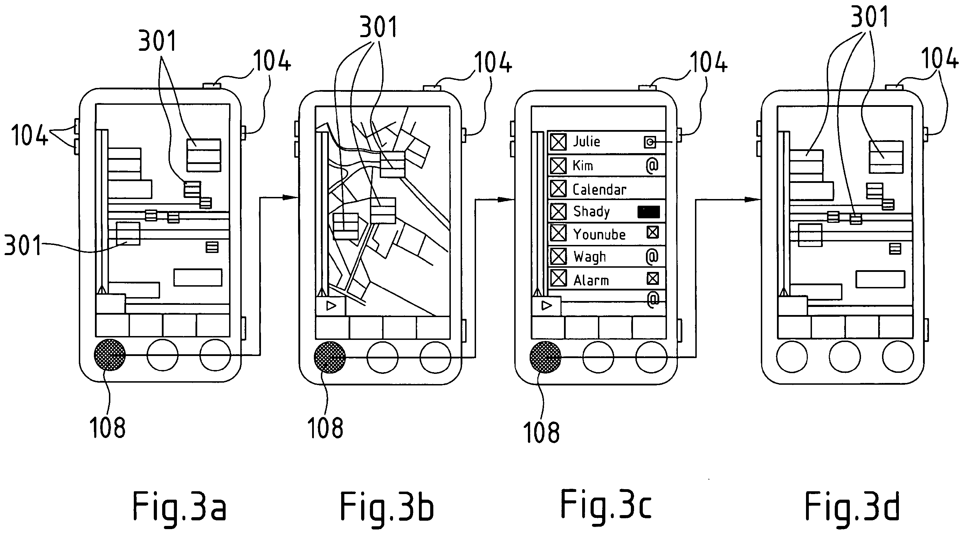

The subscriber identity module 209 may be configured as a subscriber identity module (SIM) according to the GSM standard or as a universal subscriber identity module (USIM) according to the UMTS standard, for example. Finally, the mobile terminal 200 is equipped with a GPS module 210 allowing to determine the geographical location of the mobile terminal 200. In the memory 202 maps are stored such that the communication device 100 can indicate the present location of the device of the screen 101. The functionality of the GPS module 210 provides the opportunity to support the user with additional contextual information related to the received communication items as will be described in the following in connection with figures 3a to 3d showing different kinds of views or representations of the communication items 107 on the screen 101. The main processor 210 allows to display different zooming levels of the map on the display 204.

Figure 3a shows a time line view to visualize moving through time and space. Each communication item or event is represented by an event tile 301. The event tile 301 is a graphical element or an icon. The event tiles 301 are of three to five different sizes, the largest being the most recent event. The event tiles float above invisible time line dividers.

There are at least three and no more than twelve event tiles 301 visible on the screen 101 at any one time basic zoom level. The time dividers are just automatically displaying the past three to twelve tiles in a 3-dimensional time line view. The screen can be scrolled back and for the in time by flicking. The screen cannot be scrolled backward from the first event in life drive. There is no limit for scrolling into the future.

Scrolling into the future is only limited by the event that is the furthest away ahead in time.

When the user presses hard key 108 which is most on the left then the time line view on the screen changes to a geography view shown in figure 3b.

In the geography view all and the same events are shown as in the time line view illustrated in Figure 3a. Events are located according to the place or geographical location of occurrence. That means that each received communication item is associated with the actual position where the communication device was located when the communication item was received. If there are several occurrences located in the same place, the newest events overlays others. An occurrence in this regard is the receipt of a communication item.

The centred event tile is the closest event tile in time line view or lowest event in a list view (Figure 3c) when changing between use. The list view shown in Figure 3c and corresponds to the view shown in Figure 1.

In the list view shown in Figure 3c all and the same events are listed as in the time line view. Events are listed in reverse on a logical order so the oldest event is on the top of the list, the latest i.e. newest event is the lowest event on the list when the view is opened. If the user has scrolled or switched to the geography view when changing to the list view, the list view will be opened at the same stage than the view was. i.e. the latest event on the screen is now the most up upward in the list. The event list in the list view can be scrolled by penning.

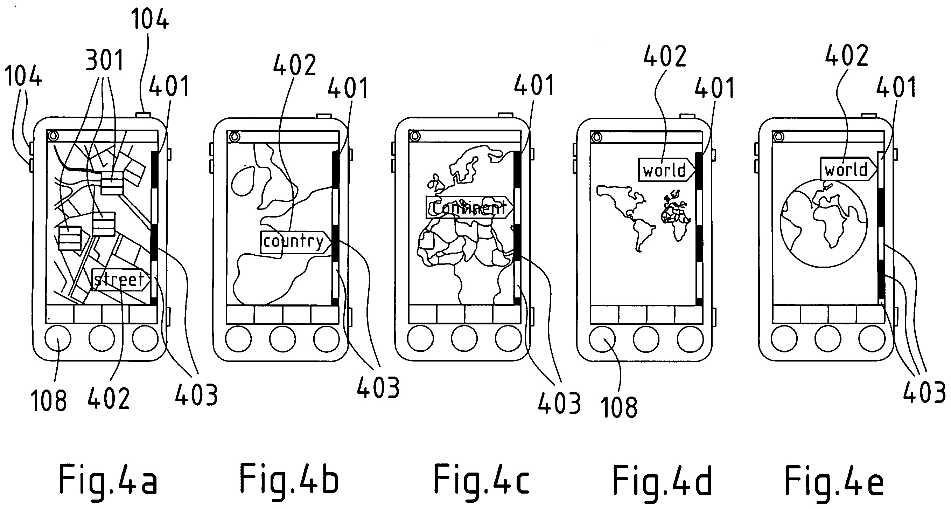

Coming back to the geography view, Figures 4a to 4e show different zooming levels of the geography view. A zoom bar 401 on the right hand side of the screen 101 indicates the zooming level. The zoom bar 401 appears only when the user selects zooming function in command bar. There are four zoom levels, basic level is the maximum zooming number of event tiles shown on the screen 102 is not limited in geographic view.

A zoom bar label 402 informs the user in which zoom level he is. Specifically, Figure 4a corresponds to a zoom level "street", Figure 4b corresponds to a zoom level "country", Figure 4c corresponds to a zoom level "continent", and Figures 4d and 4e correspond to a zoom level "world".

The zoom bar 401 indicates the zooming level of the geography view. Tapping on the zoom bar 401 with a finger tip or a pen-like pointing device moves the zoom bar label 402 and zooms the geography view accordingly. The zoom bar 401 is divided in several sections 403 helping the user to select a zooming level. The zoom bar label 402 is always placed in the middle of the selected zooming level. If the stored map data allow continuous zooming is used. If this is not the case there are four zooming levels as shown in figures 4a to 4d. Figure 4e shows a larger scale of the world since zoom bar label 402 was moved upwards even further compared to its position shown in figure 4d.

In another embodiment of the invention the zooming level is changed by a drag-and-drop operation of the zoom bar label 402. In this case the zoom bar 401 appears only when the user moves the zoom bar label. In the geography view the scroll bar 106 on the left side of the screen 102 (Figure 1) will be shown only when the user selects function play from command bar. The scroll bar works like a progress bar.

The present invention enables a user to switch different views to represent communication items on the screen of the communication device 100. Since in the specific communication item selected in the time line view or in the list view appears in the centre of the geography view he may verify additional contextual information such as a location where he has taken a photo. The additional contextual information helps the user to organize his communication items, not only with regard to photos. Many individuals remember events much better in specific context, e.g. they remember that they received an e-mail they are now looking for while they were sitting in a restaurant during lunch. In this example the time and the location helps the user to find the e-mail by switching between the different views.

### List of reference numerals

- 100: communication device
- 101: screen
- 102: top surface
- 103: housing
- 104: buttons
- 105: command bar
- 106: scroll bar
- 107: communication items
- 108: hard key
- 200: mobile terminal
- 201: main processor
- 202: memory
- 203: radio interface
- 204: LCD display
- 205: input unit
- 206: microphone
- 207: loud speaker
- 208: card reader
- 209: SIM card
- 210: GPS module
- 301: event tile
- 401: zoom bar
- 402: zoom bar label
- 403: zoom bar sections

## Claims

1. Method for organizing data items, wherein the method comprises the following steps:
- associating a communication event (107) received by a communication device with the data item;
- generating a graphical element (301) for each data item;
- associating the graphical element (301) to the corresponding data item;
- determining geographical location data of a geographical location of the communication device; and
- linking the geographical location data with the data item;
**characterized in, that**
the method further comprises the step of displaying a map in conjunction with the graphical elements (301), where the graphical elements (301) are positioned according to the geographical location data linked with the data item representing the geographical location, where the communication device received the communication event.

2. Method according to Claim 1, wherein the method further comprises the step of providing a zooming functionality for the map.

3. Method according to Claim 2, wherein the method further comprises the step of providing a continuous zooming functionality.

4. Method according to Claim 1, wherein the method further comprises the step of providing a zooming functionality in discrete steps; and displaying a label (402) to identify the different zooming levels.

5. Method according to Claim 4, wherein the discrete steps comprise a zoom level "street", a zoom level "country", a zoom level "continent" and a zoom level "world".

6. Method according to Claim 1, wherein the method further comprises the step of positioning the graphical element (301) associated with the most recently received data item into the centre of the displayed map.

7. Method according to Claim 1, wherein the method further comprises the step of overlaying the graphical element (301) of newest communication event (107) over others located at the same place.

8. Mobile communication device comprising a radio interface (203), an input unit (205), a display (101, 204), and a processing means (201) which is connected to a location detection module (210), wherein the processing means (201) is arranged to receive a communication event (107) and to associate the communication event(107) with a graphical element (307) and to control the display (101, 204) such that a map is displayed on the display (101, 204), the mobile communication device being further arranged to determine geographical location data of a geographical location of the communication device,
**characterized in, that**
the processing means (201) places the graphical element (307) on the map corresponding to the geographical location where the communication device (100) has received the associated communication event (107).

9. Mobile communication device (100) according to claim 8, wherein the graphical element (307) is an icon.

10. Mobile communication device (100) according to claim 8, wherein the processing means (201) is arranged to execute a zoom function on the map upon user request.

11. Mobile communication device (100) according to claim 10, wherein the display (101, 204) comprises a zoom bar (401) indicating the zooming level of the geography view, where the zoom bar (401) is divided into several sections (403) to select a zooming level within the display (101, 204).

12. Mobile communication device (100) according to claim 11, wherein a zoom bar label (402) is placed in the middle of the selected zooming level.

## Patentansprüche

1. Verfahren zum Organisieren von Datenelementen, wobei das Verfahren die folgenden Schritte umfasst:
- Zuordnen eines durch eine Kommunikationsvorrichtung empfangenen Kommunikationsereignisses (107) zu dem Datenelement;
- Erzeugen eines graphischen Elements (301) für jedes Datenelement;
- Zuordnen des graphischen Elements (301) zu dem entsprechenden Datenelement;
- Bestimmen geographischer Ortsdaten eines geographischen Orts der Kommunikationsvorrichtung; und
- Verknüpfen der geographischen Ortsdaten mit dem Datenelement;
**dadurch gekennzeichnet, dass**
das Verfahren ferner den Schritt des Anzeigens einer Karte zusammen mit den graphischen Elementen (301) umfasst, wobei die graphischen Elemente (301) in Übereinstimmung mit den geographischen Ortsdaten positioniert werden, die mit dem Datenelement, das den geographischen Ort repräsentiert, wo die Kommunikationsvorrichtung das Kommunikationsereignis empfangen hat, verknüpft sind.

2. Verfahren nach Anspruch 1, wobei das Verfahren ferner den Schritt des Bereitstellens einer Zoomfunktionalität für die Karte umfasst.

3. Verfahren nach Anspruch 2, wobei das Verfahren ferner den Schritt des Bereitstellens einer kontinuierlichen Zoomfunktionalität umfasst.

4. Verfahren nach Anspruch 1, wobei das Verfahren ferner den Schritt des Bereitstellens einer Zoomfunktionalität in diskreten Schritten; und des Anzeigens einer Marke (402) zum Identifizieren der verschiedenen Zoomfaktoren umfasst.

5. Verfahren nach Anspruch 4, wobei die diskreten Schritte einen Zoomfaktor "Straße", einen Zoomfaktor "Land", einen Zoomfaktor "Kontinent" und einen Zoomfaktor "Welt" umfassen.

6. Verfahren nach Anspruch 1, wobei das Verfahren ferner den Schritt des Positionierens des dem zuletzt empfangenen Datenelement zugeordneten graphischen Elements (301) in der Mitte der angezeigten Karte umfasst.

7. Verfahren nach Anspruch 1, wobei das Verfahren ferner den Schritt des Überlagerns des graphischen Elements (301) des neuesten Kommunikationsereignisses (107) über andere, die sich an derselben Stelle befinden, umfasst.

8. Mobilkommunikationsvorrichtung, die eine Funkschnittstelle (203), eine Eingabeeinheit (205), eine Anzeige (101, 204) und ein Verarbeitungsmittel (201), das mit einem Ortsdetektionsmodul (210) verbunden ist, umfasst, wobei das Verarbeitungsmittel (201) zum Empfangen eines Kommunikationsereignisses (107) und zum Zuordnen des Kommunikationsereignisses (107) zu einem graphischen Element (307) und zum Steuern der Anzeige (101, 204) in der Weise, dass auf der Anzeige (101, 204) eine Karte angezeigt wird, ausgelegt ist, wobei die Mobilkommunikationsvorrichtung ferner zum Bestimmen geographischer Ortsdaten eines geographischen Orts der Kommunikationsvorrichtung ausgelegt ist,
**dadurch gekennzeichnet, dass**
das Verarbeitungsmittel (201) das graphische Element (307) auf der Karte entsprechend dem geographischen Ort, wo die Kommunikationsvorrichtung (100) das zugeordnete Kommunikationsereignis (107) empfangen hat, anordnet.

9. Mobilkommunikationsvorrichtung (100) nach Anspruch 8, wobei das graphische Element (307) ein Icon ist.

10. Mobilkommunikationsvorrichtung (100) nach Anspruch 8, wobei das Verarbeitungsmittel (201) dafür ausgelegt ist, auf Nutzeranforderung eine Zoomfunktion an der Karte auszuführen.

11. Mobilkommunikationsvorrichtung (100) nach Anspruch 10, wobei die Anzeige (101, 204) eine Zoomleiste (401) umfasst, die den Zoomfaktor der Geographieansicht angibt, wobei die Zoomleiste (401) in mehrere Abschnitte (403) geteilt ist, um einen Zoomfaktor innerhalb der Anzeige (101, 204) auszuwählen.

12. Mobilkommunikationsvorrichtung (100) nach Anspruch 11, wobei in der Mitte des ausgewählten Zoomfaktors eine Zoomleistenmarke (402) angeordnet ist.

## Revendications

1. Procédé d'organisation d'éléments de données, dans lequel le procédé comprend les étapes suivantes :
- associer un événement de communication (107) reçu par un dispositif de communication à l'élément de données ;
- générer un élément graphique (301) pour chaque élément de données ;
- associer l'élément graphique (301) à l'élément de données correspondant ;
- déterminer des données d'emplacement géographique d'un emplacement géographique du dispositif de communication ; et
- lier les données d'emplacement géographique à l'élément de données ;
**caractérisé en ce que**
le procédé comprend en outre l'étape consistant à afficher une carte en conjonction avec les éléments graphiques (301), où les éléments graphiques (301) sont positionnés en fonction des données d'emplacement géographique liées à l'élément de données représentant l'emplacement géographique, où le dispositif de communication a reçu l'événement de communication.

2. Procédé selon la revendication 1, dans lequel le procédé comprend en outre l'étape consistant à fournir une fonctionnalité de zoom pour la carte.

3. Procédé selon la revendication 2, dans lequel le procédé comprend en outre l'étape consistant à fournir une fonctionnalité de zoom continu.

4. Procédé selon la revendication 1, dans lequel le procédé comprend en outre l'étape consistant à fournir une fonctionnalité de zoom en étapes discrètes ; et afficher une étiquette (402) pour identifier les différents niveaux de zoom.

5. Procédé selon la revendication 4, dans lequel les étapes discrètes comprennent un niveau de zoom « rue », un niveau de zoom « pays », un niveau de zoom « continent » et un niveau de zoom « monde ».

6. Procédé selon la revendication 1, dans lequel le procédé comprend en outre l'étape consistant à positionner l'élément graphique (301) associé à l'élément de données reçu le plus récemment dans le centre de la carte affichée.

7. Procédé selon la revendication 1, dans lequel le procédé comprend en outre l'étape consistant à superposer l'élément graphique (301) de l'événement de communication le plus récent (107) sur d'autres situés au même endroit.

8. Dispositif de communication mobile comprenant une interface radio (203), une unité de saisie (205), un affichage (101, 204) et un moyen de traitement (201) qui est connecté à un module de détection d'emplacement (210), dans lequel le moyen de traitement (201) est agencé pour recevoir un événement de communication (107) et pour associer l'événement de communication (107) à un élément graphique (307), et pour commander l'affichage (101, 204) de sorte qu'une carte est affichée sur l'affichage (101, 204), le dispositif de communication mobile étant en outre agencé pour déterminer des données d'emplacement géographique d'un emplacement géographique du dispositif de communication,
**caractérisé en ce que**
le moyen de traitement (201) place l'élément graphique (307) sur la carte correspondant à l'emplacement géographique où le dispositif de communication (100) a reçu l'événement de communication associé (107).

9. Dispositif de communication mobile (100) selon la revendication 8, dans lequel l'élément graphique (307) est une icône.

10. Dispositif de communication mobile (100) selon la revendication 8, dans lequel le moyen de traitement (201) est agencé pour exécuter une fonction de zoom sur la carte suite à une requête d'utilisateur.

11. Dispositif de communication mobile (100) selon la revendication 10, dans lequel l'affichage (101, 204) comprend une barre de zoom (401) indiquant le niveau de zoom de la vue géographique, où la barre de zoom (401) est divisée en plusieurs sections (403) pour sélectionner un niveau de zoom au sein de l'affichage (101, 204).

12. Dispositif de communication mobile (100) selon la revendication 11, dans lequel une étiquette de barre de zoom (402) est placée au milieu du niveau de zoom sélectionné.
